# EUROPÄISCHE PATENTSCHRIFT

(11) **EP 0 372 095 B1**
(45) Veröffentlichungstag und Bekanntmachung des Hinweises auf die Patenterteilung: **09.03.1994**
(21) Anmeldenummer: 88118249.7
(22) Anmeldetag: 02.11.1988
(51) Int. Cl.: H02P 6/02, H02P 3/18, B60L 7/16

(54) **Elektromotorischer Antrieb**
Electromotive drive
Entraînement électromoteur

(43) Veröffentlichungstag der Anmeldung: 13.06.1990
(73) Patentinhaber: Magnet-Motor Gesellschaft für magnetmotorische Technik mbH, D-82319 Starnberg (DE)
(72) Erfinder: Heidelberg, Götz, D-8136 Starnberg-Percha (DE); Gründel, Andreas, D-8000 München 70 (DE); Clausen, Heinz, D-8130 Starnberg (DE)
(74) Vertreter: Klunker . Schmitt-Nilson . Hirsch

(56) Entgegenhaltungen:
- CH-A- 492 336
- US-A- 4 353 016
- PATENT ABSTRACTS OF JAPAN, Band 11, Nr. 204 (E-520)(2651), 2. Juli 1987 ; & JP-A-6225884
- PATENT ABSTRACTS OF JAPAN, Band 11, Nr. 280 (E-539)(2727), 10. September 1987; & JP-A-6277887

## Beschreibung

Die Erfindung betrifft einen elektromotorischen Antrieb mit einem Stator mit Statorwicklungen, einem Läufer und einem an ein Stromversorgungsnetz angeschlossenen Gleichspannungszwischenkreis, über den die Statorwicklungen gesteuert gespeist werden, um den Läufer anzutreiben, wobei der Gleichspannungszwischenkreis an Statorstellglieder angeschlossen ist, um diesen elektrische Leistung für die Statorwicklungen zuzuführen, und wobei zwischen dem Gleichspannungszwischenkreis und den Statorstellgliedern eine Energie-Zu-und Rückleitung angeordnet ist, über die den Statorwicklungen beim Antreiben bzw. beim Bremsen des Läufers Energie zugeführt bzw. induzierte elektrische Energie zurückgeführt wird. Ein derartiger Antrieb ist aus JP-A-62-25884 bekannt.

Bei solchen elektromotorischen Antrieben kann es sich entweder um rotatorische Antriebe, also herkömmliche Elektromotoren mit Stator und Rotor handeln, oder aber um einen sog. Linearantrieb, der einen Längsstator und als Läufer einen oder mehrere parallel zu diesem bewegten Wagen aufweist.

Insbesondere bei sog. Linearantrieben stellt sich häufig das Problem der Notbremsung. Werden zum Beispiel auf einer Linearantriebsstrecke mehrere Läufer in verschiedenen Stator-Abschnitten bewegt, so muß dafür Sorge getragen sein, daß es nicht zu Kollisionen kommt. Derartige Situationen treten zum Beispiel bei Netzausfall auf.

Aber auch bei Elektromotoren mit beispielsweise mehrere Statorwicklungen aufweisendem Stator und Permanentmagnet-Rotor stellt sich häufig das Problem der Notbremsung.

Bislang ist man den Erfordernissen einer ausreichenden Notbremsung dadurch nachgekommen, daß man zusätzlich zu den für den Antrieb benötigten Teilen Abtasteinrichtungen für Überwachungs- und Diagnoseaufgaben installiert hat, um bei Ansprechen dieser Abtasteinrichtungen zusätzlich installierte mechanische Notbremsen in Gang zu setzen. Der hierdurch bedingte konstruktive Aufwand ist erheblich. Insbesondere muß dafür Sorge getragen werden, daß eine gegebenenfalls vorhandene, mit niedriger Spannung arbeitende Steuerung in der Lage ist, die ihr obliegenden Steuerungsaufgaben bei einer Notbremsung wahrzunehmen. Unter Umständen muß hier eine separate, netzunabhängige Stromversorgung vorhanden sein.

Aus CH-A-492 336 ist auch ein Verfahren zur elektrischen Bremsung einer Synchronmaschine bekannt, bei dem die Erregerwicklung beim Bremsen aus dem vom Netz abgetrennten Anker der Maschine selbst über Gleichrichter ge = speist wird, um so die Bremsung von anderen Stromquellen unabhängig zu machen.

Der Erfindung liegt die Aufgabe zugrunde, einen elektromotorischen Antrieb der eingangs genannten Art zu schaffen, bei dem die speziell für eine Notbremsung vorzusehenden Mittel relativ billig realisierbar sind, wobei insbesondere auf eine separate Stromversorgung für eine Steuerung verzichtet werden kann.

Diese Aufgabe wird erfindungsgemäß dadurch gelöst, daß der Gleichspannungszwischenkreis über eine Energieversorgungsleitung an eine Steuereinheit angeschlossen ist, die die Statorstellglieder steuert.

Bei dem erfindungsgemäßen elektromotorischen Antrieb wird die elektrische Antriebsenergie von dem Gleichspannungszwischenkreis den Statorstellgliedern zugeführt, und diese Stellglieder sorgen dafür, daß den zugehörigen Statorwicklungen diejenige elektrische Leistung zugeführt wird, die für den vorgegebenen Antrieb angemessen ist. Außerdem versorgt der Gleichspannungszwischenkreis auch noch eine Steuereinheit, welche den einzelnen Statorstellgliedern die für die Steuerung des Antriebs benötigten Steuersignale zuführt. Die Energieleitung zwischen den Statorwicklungen und ihren zugehörigen Stellgliedern einerseits und dem Gleichspannungszwischenkreis andererseits ermöglicht auch bei Netzausfall eine Aufrechterhaltung der Spannungsversorgung der Steuereinheit. Dabei wird nämlich zum Beispiel während einer Notbremsung die kinetische Energie des Läufers ausgenutzt. Der bewegte Läufer induziert in den überfahrenen Statorwicklungen elektrische Energie, die an den Gleichspannungszwischenkreis zurückgegeben wird. Der Gleichspannungszwischenkreis kann diese elektrische Energie nutzen, um zum Beispiel - bei einem Antrieb mit mehreren Läufern in einer Linearantriebs-Anlage - andere Läufer mit Antriebsenergie zu speisen oder die Steuereinheit mit einem Spannungspegel zu versorgen, der ausreichend groß ist, damit die Steuereinheit ihre Steueraufgaben wahrnehmen kann.

Die Erfindung eignet sich besonders für einen Antrieb, bei dem die Stellglieder von der Steuereinheit Steuersignale empfangen und sie in Stellsignale umsetzen, die die Speisung der zugehörigen Statorwicklung oder Statorwicklungen mit elektrischem Strom festlegen. Ein für Steuerungszwecke ohnehin mit Sensoren ausgestattetes System erfaßt eventuelle Unregelmäßigkeiten beim Antrieb, unter anderem auch einen möglichen Netzausfall, um ansprechend auf solche festgestellten Unregelmäßigkeiten unmittelbar eine Notbremsung einzuleiten. Die Notbremsung kann elektrisch und/oder mechanisch erfolgen. In einem solchen System brauchen keine zusätzlichen Sensoren für das Notbremsungs-Programm vorgesehen zu werden. Insbesondere benötigt der erfindungsgemäße Antrieb keine separate Spannungsquelle für die Steuereinheit, zum Beispiel eine Stützbatterie, die gewährleistet, daß bei Netzausfall die Steuerung noch ausreichend lange bis zum Abschluß der Notbremsung arbeitet.

Vorzugsweise sind jeder Statorwicklung oder jedem Statorwicklungsabschnitt ein Statorstellglied und eine Sensoranordnung zugeordnet, um die Lage des Läufers zu ermitteln. Die Sensoranordnung dient zur Steuerung des Antriebs. Sie ermittelt die Lage des Läufers oder der Läufer in bezug auf den Stator. Eine Sensorsignalleitung zwischen den Sensoren und der Steuereinheit ermöglicht die andauernde Überwachung der Läufer-Stellungen und den Vergleich dieser Läufer-Stellungen mit vorgegebenen Soll-Stellungen.

Im folgenden wird ein Ausführungsbeispiel der Erfindung anhand der Zeichnung näher erläutert. Es zeigen:
- Fig. 1: ein Blockschaltbild eines elektromotorischen Antriebs mit Steuerung,
- Fig. 2: ein Blockschaltbild eines elektromotorischen Antriebs mit einer Einrichtung für eine Notbremsung und
- Fig. 3: ein Blockschaltbild eines Linearantriebs.

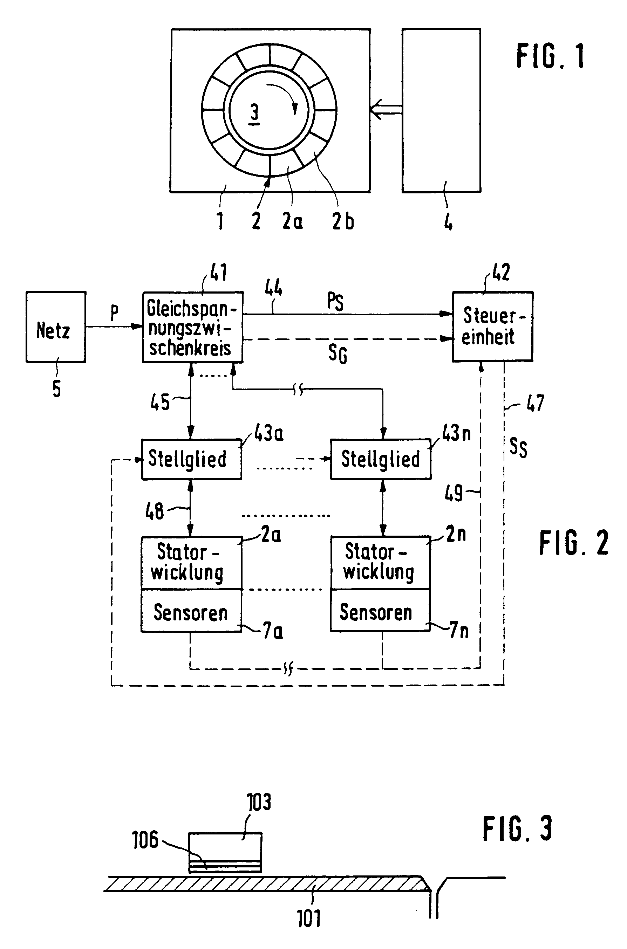

Fig. 1 zeigt einen Elektromotor 1 mit einem mehrere Statorwicklungen 2a, 2b ... aufweisenden Stator 2 und einem als Permanentmagnet-Rotor ausgebildeten Rotor 3, der sich bei entsprechender Speisung der Statorwicklungen in Pfeilrichtung oder entgegen der Pfeilrichtung zu drehen vermag. Die Statorwicklungen 2a, 2b ... besitzen ihnen zugeordnete Stellglieder, die von einer gemeinsamen Steuereinheit mit Steuersignalen versehen werden, diese Steuersignale in Stellsignale umsetzen und dementsprechend den Stromfluß in den Statorwicklungen festlegen. In Fig. 1 ist die gesamte Steuerung als Block mit dem Bezugszeichen 4 dargestellt.

Fig. 2 zeigt den Gesamtaufbau eines elektromotorischen Antriebs (ohne den Läufer) im einzelnen.

Aus einem Netz 5 wird elektrische Leistung P von einem Gleichspannungszwischenkreis 41 entnommen. Der Gleichspannungszwischenkreis 41 beinhaltet in an sich bekannter Weise Umrichter, die die Netzspannung in zur Einspeisung in die Statorwicklungen 2a ... 2n geeignete Gleichspannung umrichtet. Über eine Stromschiene 45 wird von dem Gleichspannungszwischenkreis 41 Stellgliedern 43a ... 43n elektrischer Strom zugeführt.

Jeder Statorwicklung 2a ... 2n ist ein Stellglied 43a ... 43n zugeordnet. Jedes Stellglied empfängt über eine Steuerleitung 47 von einer Steuereinheit 42 Steuersignale S_{S}. Jedes Stellglied verarbeitet die ihm zugeführten Steuersignale und bildet Stellsignale für die Ansteuerung der zugehörigen Statorwicklung mit einer bezüglich Amplitude und Phase festgelegten Spannung, um den Rotor 3 mit einer bestimmten Drehzahl anzutreiben.

Die Steuereinheit 42 empfängt außerdem Sensorsignale. Die in jedem Stator angeordneten Sensoren liefern ihre Signale an die Steuerung, wodurch die jeweilige Lage des Läufers erfaßt wird. Die Sensorsignale werden über die mehradrige Leitung 49 an die Steuereinheit 42 gegeben. Die Steuereinheit wertet die Sensorsignale aus, um ihrerseits gegebenenfalls modifizierte Steuersignale an die Stellglieder zu geben. Außerdem erhält die Steuereinheit Steuersignale S_{G} von dem Gleichspannungszwischenkreis 41.

Der Betrieb der Steuereinheit 42 wird durch eine relativ geringe Gleich-Versorgungsspannung aufrecht erhalten. Diese Versorgungsenergie wird der Steuereinheit 42 in Form eines Signals P_{S} über eine Energieversorgungsleitung 44 zugeführt.

Gemäß Fig.2 erfolgt die Kopplung der Statorwicklungen 2a ... 2n mit dem Gleichspannungszwischenkreis über die den Statorwicklungen zugeordneten Stellglieder. Im Fall einer Abbremsung oder Verzögerung des Läufers wird durch den Läufer in den überfahrenen Statorwicklungen 2a ... 2n elektrische Energie induziert. Diese induzierte Energie P_{I} wird über die Statorwicklung- und die Stellgliedleitung 48 dem Gleichspannungszwischenkreis 41 zugeführt.

Der "Normalbetrieb" des elektromotorischen Antriebs geht aus der obigen Beschreibung hervor. Wenn es zu einem Netzausfall kommt, wird dies der Steuereinheit 42 von dem Gleichspannungszwischenkreis signalisiert. Die Steuereinheit 42 gibt den Stellgliedern 43a ... 43n umgehend den Befehl zur Notbremsung. Bei einem Netzausfall wird die Notbremsung zum Beispiel in der Form eingeleitet, daß die Statorwicklungen so angesteuert werden, daß der Läufer abgebremst wird. Zusätzlich oder alternativ ist eine mechanische Notbremsung möglich.

Während der Notbremsung muß zumindest die Steuereinheit 42 mit Spannung versorgt werden. Die hierzu benötigte elektrische Energie und gegebenenfalls in den Stellgliedern der Statorwicklungen benötigte Energie wird von dem Gleichspannungszwischenkreis 41 unabhängig vom Netz 5 geliefert. Gewonnen wird die elektrische Energie aus der kinematischen Energie des Läufers. Beim Bremsvorgang induziert der Läufer in den Statorwicklungen elektrische Energie, die über die Energieleitung in den Gleichspannungszwischenkreis 41 eingespeist wird. Die beim Bremsvorgang induzierte elektrische Energie wird im Gleichspannungszwischenkreis gespeichert, über autark arbeitende Widerstandsbrems-Stellereinheiten abgeführt oder aber ins Netz zurückgespeist.

Das oben beschriebene Ausführungsbeispiel bezieht sich auf einen Rotations-Antrieb mit sich drehendem Läufer (Rotor).

Die Erfindung ist aber auch gleichermaßen bei Linearantrieben anwendbar. Gemäß Fig. 3 sind die Statorwicklungen dann Wicklungen eines Längsstators 101, und der Läufer ist zum Beispiel ein mit einer Permanentmagnetleiste 106 ausgestatteter Wagen 103, der sich längs dem Längsstator 101 bewegt.

Es ist möglich, nicht für jede Statorwicklung bzw. jeden Statorwicklungsabschnitt eine eigene Sensoranordnung vorzusehen, sondern mit den Signalen einer Sensoranordnung mehrere Statorwicklungen bzw. Statorwicklungsabschnitte zu steuern. Dies geht nicht nur bei gleichzeitig zu schaltenden Statorwicklungen bzw. Statorwicklungsabschnitten, sondern auch bei mit Zeitdifferenz zu schaltenden Statorwicklungen bzw. Statorwicklungsabschnitten, wenn die von der Drehzahl bzw. Geschwindigkeit des Antriebs abhängige Zeitdifferenz über einen Rechner berücksichtigt wird.

Schließlich wird darauf hingewiesen, daß z.B. bei Netzausfall nicht unbedingt eine Notbremsung eingeleitet werden muß, sondern die Erfindung lediglich zur Sicherstellung der ordnungsgemäßgen Steuerung des Antriebs in seiner Auslaufphase vorgesehen sein kann.

## Patentansprüche

1. Elektromotorischer Antrieb, mit einem Stator (2) mit Statorwicklungen (2a, 2b ... 2n), einem Läufer (3;103) und einem an ein Stromversorgungsnetz (5) angeschlossenen Gleichspannungszwischenkreis (41), über den die Statorwicklungen (2a, 2b ... 2n) gesteuert gespeist werden, um den Läufer (3; 103) anzutreiben, wobei der Gleichspannungszwischenkreis (41) an Statorstellglieder (43a ... 43n) angeschlossen ist, um diesen elektrische Leistung für die Statorwicklungen zuzuführen, und wobei zwischen dem Gleichspannungszwischenkreis (41) und den Statorstellgliedern eine Energie-Zu-und Rückleitung (45, 48) angeordnet ist, über die den Statorwicklungen (2a, 2b ... 2n) beim Antreiben bzw. beim Bremsen des Läufers (3; 103) Energie zugeführt bzw. induzierte elektrische Energie zurückgeführt wird,
dadurch gekennzeichnet,
daß der Gleichspannungszwischenkreis (41) über eine Energieversorgungsleitung (44) an eine Steuereinheit (42) angeschlossen ist, die die Statorstellglieder (43a ... 43n) steuert.

2. Antrieb nach Anspruch 1,
dadurch gekennzeichnet,
daß der Antrieb ein Elektromotor (1) mit einem Rotor (3) ist.

3. Antrieb nach Anspruch 2,
dadurch gekennzeichnet,
daß der Rotor ein Permanentmagnet-Rotor (3) ist.

4. Antrieb nach Anspruch 1,
dadurch gekennzeichnet,
daß er ein Linearantrieb (101, 103, 106) ist.

5. Antrieb nach Anspruch 4,
dadurch gekennzeichnet,
daß der Läufer ein Permanentmagnet-Wagen (103) ist.

6. Antrieb nach einem der Ansprüche 1 bis 5,
dadurch gekennzeichnet,
daß jeder Statorwicklung (2a, 2b ...2n) oder jedem Statorwicklungsabschnitt ein Statorstellglied (43a ... 43n) und eine Sensoranordnung (7a ... 7n) zugeordnet sind, um die Lage des Läufers (3; 103) zu ermitteln, und daß eine Sensorsignalleitung (49) zwischen den Sensoren (7a ... 7n) und der Steuereinheit (42) vorgesehen ist.

## Claims

1. An electromotive drive, comprising a stator (2) having stator coils (2a, 2b ... 2n), a movable part (3; 103) and a d.c. voltage intermediate circuit (41) which is connected to a power supply network (5) and via which the stator coils (2a, 2b ... 2n) are fed with power in controlled manner for driving the movable part (3; 103), the d.c. voltage intermediate circuit (41) being connected to stator controllers (43a ... 43n) for supplying the same with electrical power for the stator coils, and an energy supply and return line (45, 48) being disposed between the d.c. voltage intermediate circuit (41) and the stator controllers, through which energy is supplied to the stator coils (2a, 2b ... 2n) during driving of the movable part (3; 103) and through which induced electrical energy is returned during decelerating of the movable part (3; 103),
characterized in that the d.c. voltage intermediate circuit (41) is connected via an energy supply line (44) to a control unit (42) controlling the stator controllers (43a ... 43n).

2. A drive according to claim 1,
characterized in that the drive is an electric motor (1) having a rotor (3).

3. A drive according to claim 2,
characterized in that the rotor is a permanent magnet rotor (3).

4. A drive according to claim 1,
characterized in that it is a linear drive (101, 103, 106).

5. A drive according to claim 4,
characterized in that the movable part is a permanent magnet carriage (103).

6. A drive according to any one of clais 1 to 5,
characterized in that each stator coil (2a, 2b ... 2n) or each stator coil section has a stator controller (43a ... 43n) and a sensor arrangement (7a ... 7n) associated therewith for determining the position of the movable part (3; 103), and in that a sensor signal line (49) is provided between the sensors (7a ... 7n) and the control unit (42).

## Revendications

1. Dispositif d'entraînement par moteur électrique, comportant un stator (2) avec des enroulements (2a, 2b,... 2n), un rotor (3 ; 103) et un circuit intermédiaire à courant continu (41), raccordé à un réseau d'alimentation électrique (5), par lequel les enroulements (2a, 2b,... 2n) du stator sont alimentés de manière commandée, afin d'entraîner le rotor (3 ; 103), le circuit intermédiaire à courant continu (41) étant raccordé à des organes de réglage (43a... 43n) du stator afin de leur envoyer une puissance électrique pour les enroulements du stator, et une ligne d'arrivée et de retour d'énergie (45, 48) étant prévue entre le circuit intermédiaire à courant continu (41) et les organes de réglage du stator, par laquelle de l'énergie est envoyée aux enroulements (2a, 2b, ... 2n) du stator lors de l' entraînement du rotor (3;103) et par laquelle de l'energie électrique induite est renvoyée lors du freinage du rotor (3;103), caractérisé en ce que le circuit intermédiaire à courant continu (41) est raccordé par une ligne d'alimentation électrique (44) à une unité de commande (42), qui commande les organes de réglage (43a... 43n) du stator.

2. Dispositif d'entraînement selon la revendication 1, caractérisé en ce que celui-ci est un moteur électrique (1) avec un rotor (3).

3. Dispositif d'entraînement selon la revendication 2, caractérisé en ce que le rotor est un rotor à aimant permanent (3).

4. Dispositif d'entraînement selon la revendication 1, caractérisé en ce qu'il s'agit d'un entraînement linéaire (101, 103, 106).

5. Dispositif d'entraînement selon la revendication 4, caractérisé en ce que le rotor est un chariot à aimant permanent (103).

6. Dispositif d'entraînement selon l'une quelconque des revendications 1 à 5, caractérisé en ce qu'à chaque enroulement (2a, 2b,... 2n) du stator ou à chaque section d'enroulement il est associé un organe de réglage (43a... 43n) du stator et un dispositif à capteur (7a... 7n), afin de déterminer la position du rotor (3 ; 103) et en ce qu'il est prévu une ligne de signalisation des capteurs (49) entre les capteurs (7a... 7n) et l'unité de commande (42).
